# EUROPÄISCHE PATENTANMELDUNG

(11) **EP 2 337 005 A1**
(43) Veröffentlichungstag der Anmeldung: **22.06.2011**
(21) Anmeldenummer: 10190022.3
(22) Anmeldetag: 04.11.2010
(51) Int. Cl.: G09B 9/08, G09B 9/10

(54) **Fliehkraftsimulator für Paragleiten**

(30) Priorität: 26.11.2009 AT 18862009
(71) Anmelder: Grabner, Thomas, 8962 Gröbming (AT)
(72) Erfinder: Grabner, Thomas, 8962 Gröbming (AT)
(74) Vertreter: Weiss, Christian

(57) **Zusammenfassung**

Der Fliehkraftsimulator ist ein Ausbildungs- und Trainingsgerät für Paragleiten (Gleitschirmfliegen), wobei eine kombinierte Drehbewegung des Piloten um seine x - und z - Achse während der Beschleunigung auf einer Kreisbahn, durch eine mechanische oder elektromechanische Koppelung der beiden Auslenkungen realisiert wird. Diese beiden Bewegungen sind mechanisch aufeinander einstellbar. Zur Simulation der visuellen Eindrücke kann ein Virtual Reality System zum Einsatz kommen, dass die durch den Fliehkraftsimulator erzeugte Lage des Piloten in Abhängigkeit der Fliehkraft und des Blickwinkels des Piloten verarbeitet. Der Fliehkraftsimulator mit Virtual Reality System für Paragleiten (Gleitschirmfliegen) ist eine Entwicklung bei der die Sicherheit im Flugsport Paragleiten kostengünstig und schnell, wesentlich erhöht werden kann.

## Beschreibung

Die Erfindung betrifft ein Ausbildungs- und Trainingsgerät für den Bereich Paragleiten (Gleitschirmfliegen), dass es dem Piloten ermöglicht, sich in sehr realistischer Weise an die auftretenden g-Belastungen (Fliehkraftbelastungen) bei Flugmanövern beim Gleitschirmfliegen zu gewöhnen, diese zu trainieren und gefahrlos den Körper an diese Kräfte und visuellen Eindrücke heranzuführen.

### Erläuterung Paragleiten, Schnellabstiegshilfen

Parageiten oder auch Gleitschirmfliegen ist eine Flugsportart, bei dem der Pilot mit einem Gleitschirm von einem Berg startet und unter Nutzung von dynamischen oder thermischen Aufwinden ohne Motor bis zu mehreren Stunden in der Luft sein kann und Flugstrecken von weit mehr als 100 km zurücklegen kann.

Durch seine geringe Fluggeschwindigkeit ist der Gleitschirm zum einen ein sehr wendiges Fluggerät, dadurch aber auch anfällig auf Wetteränderungen. Windgeschwindigkeiten von 30 km/h, für viele Fluggeräte kein Problem, sind für den Gleitschirm bereits als grenzwertig zu betrachten.

Wetteränderungen die oft sehr schnell eintreten, zu starke thermische Aufwinde und Turbulenzen zwingen Piloten oft zum Abbruch eines Flugvorhabens. In diesem Fall ist es erforderlich so genannte Schnellabstiegshilfen gut zu beherrschen, um einen Flug rechtzeitig beenden zu können. Die mit Abstand effektivste Schnellabstiegshilfe ist die Steilspirale. Mit Sinkwerten von bis zu 20 m/s und einem Lastvielfachen von ca. 3 bis 4 g (drei bis vierfache der Erdbeschleunigung) ist sie jedoch auch eine sehr starke Belastung für den Kreislauf des Piloten. Gefahren während diesem Manöver sind Orientierungsverlust, Gray-out und Black-out (Verlust der visuellen Wahrnehmung und Bewusstlosigkeit). Eine weitere große Gefahr ist, dass viele Gleitschirme beim Überschreiten einer gewissen Sinkgeschwindigkeit die Spiralbewegung stabil fortsetzen. Die Folgen für den Piloten der seine körperlichen Grenzen nicht kennt, können fatal sein.

### Stand der Technik zum Erlernen der Steilspirale

Das Erlernen der Schnellabstiegshilfe Steilspirale wird nur von sehr wenigen Flugschulen direkt angeboten, meist von jenen, die über ein entsprechendes Trainingsgelände verfügen in dem so genannte Sicherheitstrainings durchgeführt werden. Diese finden in der Regel über Wasser statt, werden mit Schwimmweste, Funk und Wasserrettungsboot durchgeführt. Das Erlernen kann nur in sehr kleinen Schritten erfolgen, da im Falle eines Black-out des Piloten viele Schirme die Spirale selbständig fortsetzen (stabile Spirale) und der Trainingsleiter keinen Einfluss mehr auf den drohenden Absturz des Piloten hat. Aufgrund dieser Tatsachen, gibt es immer wieder tödliche Unfälle mit Spiralsturz auch bei Spezialtrainings mit entsprechenden Sicherheitsvorkehrungen. Daher scheuen sehr viele Ausbildungszentren für Paragleiten eine Schulung von diesem Manöver aufgrund der großen Gefahren, auf die ein Trainingsleiter keinen Einfluss mehr hat. Dem Piloten verbleibt die Möglichkeit das autodidaktischen Erlernens mit noch höherem Risiko. Bis dato sind Simulatoren, die die realistische Lage und Belastungen des Piloten und die entsprechenden visuellen Eindrücken in so einem Manöver nachstellen, nicht in der Ausbildung im Einsatz oder bekannt.

Aus der BR Pl 700 526 A geht ein Simulator für den Paragleitflug hervor, der im Wesentlichen aus drei zueinander beweglichen Komponenten besteht. Oben, eine fixe Deckenverankerung, darunter eine Drehkonstruktion die den Piloten entlang seiner Hochachse (Z-Achse) um 360° drehen kann, einem Schlitten, der lineare Pendelbewegungen nach vor und zurück ausführen kann, sowie eine Balance-Vorrichtung, die bei Bremsleinenzug den Piloten neigt, indem über Motoren das Sitzbrett des Gurtzeuges angehoben wird. Der Körper wird dabei "stationär" in eine Schräglage gebracht, die auf den Pilotenkörper auftretenden Kräfte entsprechen dabei aber nicht den auftretenden Kräften im Flug. Ebenso wenig kann mit einem solchen Simulator das reale Flugverhalten eines Paragleitschirms im Kurvenflug simuliert werden, also das nach vorne Kippen des Körpers des Piloten im Spiralsturz.

### Wirtschaftliche und Sicherheitstechnische Betrachtung

Ein Simulator-Training bietet eine wesentliche Steigerung der effektiven Trainingsdauer im Vergleich zur aufgewendeten Zeit (ca. 1: 500 bis 1:1000 im realen Flug, und ca. 1:10 beim Simulator - Training). Die Kosten für das Erreichen des Selben Trainingseffektes, wenn man realen Flug und Simulator-Training vergleicht, betragen am Simulator in etwa 5 bis 10 %. Ein Pilot kann mit einigen Trainingseinheiten eine effektive Trainingszeit erreichen, die er mit realen Flügen meist nur über mehrere Jahre erreichen würde.

Immer wieder passieren beim autodidaktischen Training oder auch im Rahmen von Ausbildungen schwere oder tödliche Unfälle beim Training der Steilspirale. Das Training am Simulator kann tödliche Unfälle verhindern und so Menschenleben retten.

Durch ein zeitiges Training bereits nach der Grundausbildung würde der Pilot einen Vorsprung von einigen Jahren bezogen auf die wichtigste Abstiegshilfe beim Paragleiten erzielen. Dadurch kann der Pilot von Beginn an potentiellen wetterbedingten Gefahren rechtzeitig aus dem Weg gehen. Gerade für Piloten mit wenig Praxis besteht die Gefahr, eine Wettersituation nicht richtig einzuschätzen.

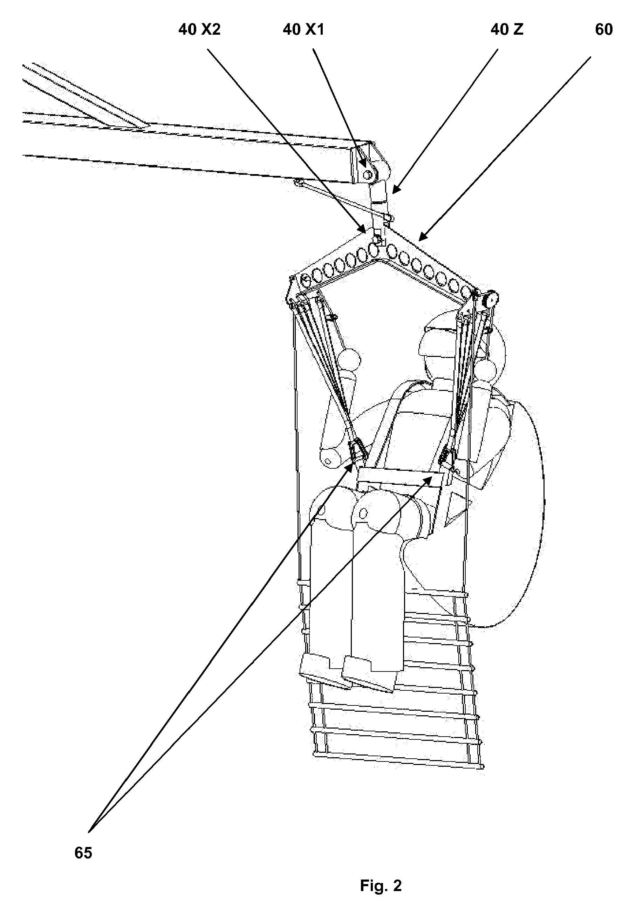

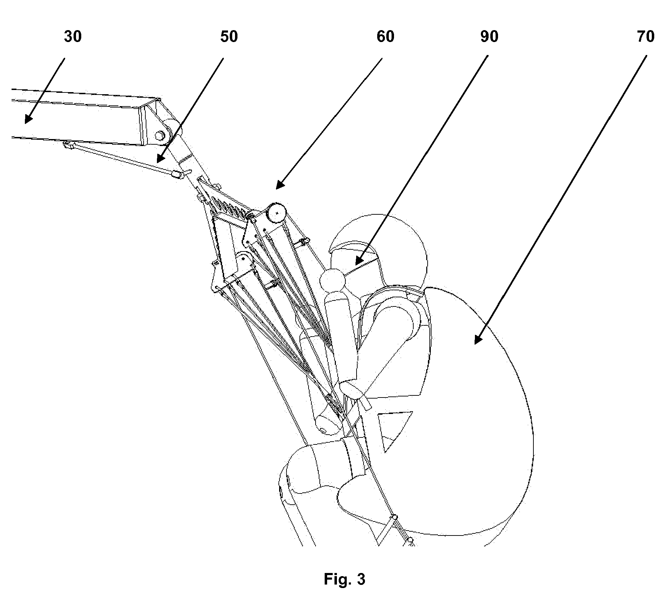

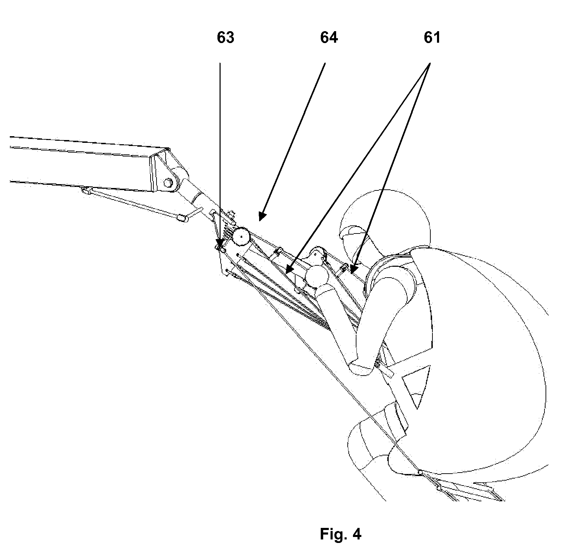

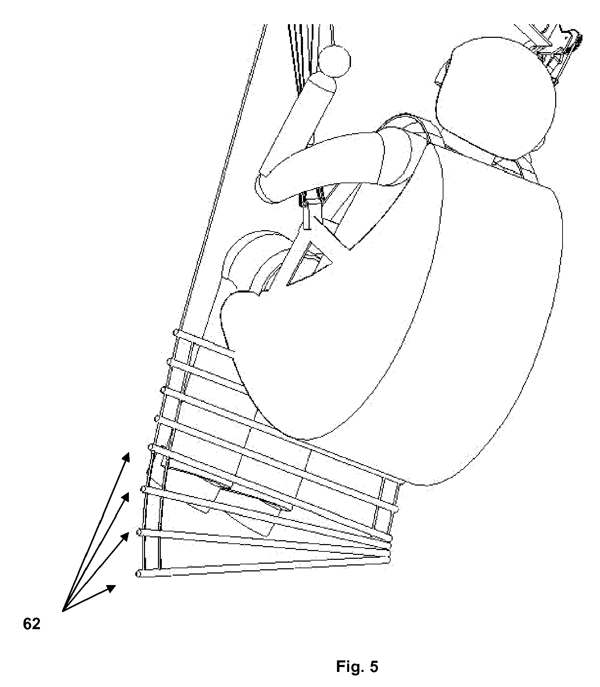

Die gegenständliche Erfindung wird nachfolgend anhand der schematischen, beispielhaften und nicht einschränkenden und vorteilhafte Ausgestaltungen zeigenden Figuren 1 bis 6 beschrieben. Dabei zeigt
- Fig. 1: Gesamtübersicht Fliehkraftsimulator
- Fig. 2: Detail; Ruhezustand von Pilot mit Gurtzeug, Verbindungsgelenk zum Rotor, Koppelung und Pilotenaufhängung
- Fig. 3: Detail; wie Fig. 2 jedoch unter Fliehkraftbelastung
- Fig. 4: Detail; wie Fig. 3 mit nochmals gesteigerter Fliehkraftbelastung
- Fig. 5: Funktion Raffgewicht (Simulation der Steuerkräfte)
- Fig. 6: Darstellung der Lage der Achsen bezogen auf den Körper des Piloten (Hochachse z, Längsachse x und Querachse y.)

### Beschreibung

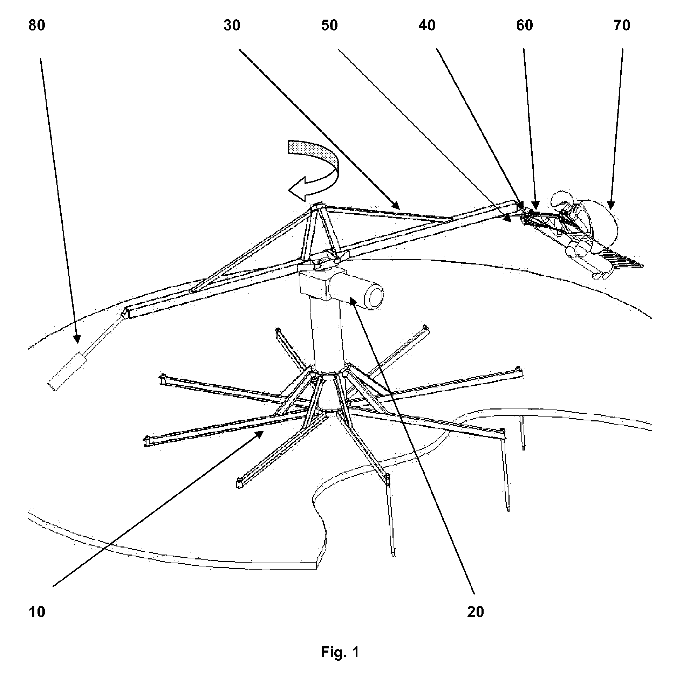

Der Fliehkraftsimulator besteht wie in Fig.1 dargestellt aus den Hauptkomponenten Montagegestell (10), Getriebemotor (20), Rotor (30) Verbindungsgelenk (40), Koppelung (50), Pilotenaufhängung (60), Gurtzeug (70) und Ausgleichsgewicht (80)

Die Auslegung von Drehzahl des Rotors (30) und Radius des Rotors (30) ist so gewählt, dass das Produkt aus Radius und Winkelgeschwindigkeit, die Fliehkraft, jenen Werten entspricht, die im Flug mit dem Gleitschirm erreicht werden. Der Radius des Rotors (30) ist dabei geringer als der Bahnradius im wirklichen Flug, dafür ist die Winkelgeschwindigkeit des Getriebemotors (20) größer. Dadurch wird eine kleinere Baugröße des Fliehkraftsimulators erreicht.

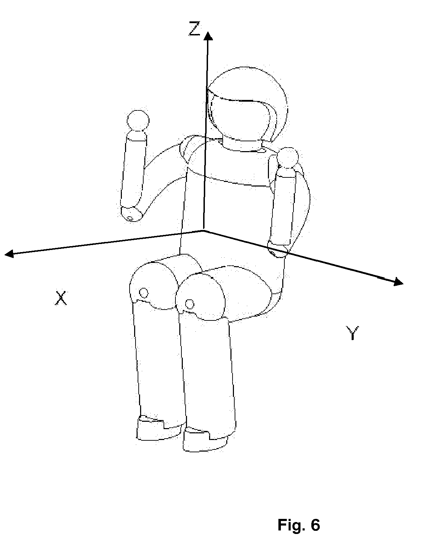

Der Fliehkraftsimulator ist so konzipiert, dass der Pilot in Abhängigkeit der Fliehkraft genau jene Lage im Raum einnimmt, die er auch während des Fluges einnimmt. Dies ist für die realistische Simulation von sehr großer Bedeutung, da die Fliehkräfte aufgeteilt in die drei Achsen gx, gy und gz , die entlang der Achsen x, y und z wirken (Fig. 6) sehr unterschiedliche Wirkung auf den Organismus haben und daher nicht nur die Resultierende dieser Komponenten betrachtet werden darf sondern die Richtung der Einzelkomponenten.

### Gewichtsverlagerung um Achse (40 X2), Verlagerung des Körperschwerpunktes nach einer Seite

### Aufgabenstellung

Ein Gleitschirm kann auf zwei Weisen in eine Kurve gesteuert werden. Entweder durch Zug an den Steuerleinen (61), oder durch Verlagerung des Körperschwerpunktes nach einer Seite. Durch diese Verlagerung wandert eine der beiden Aufhängungspunkte (65) nach oben, der andere nach unten, der Gleitschirm bekommt eine asymmetrische Auftriebsverteilung und dreht dadurch in die Richtung in die der Körperschwerpunkt verlagert wird.

### Technische Realisierung

Die Pilotenaufhängung (60) ist durch das Verbindungsgelenk (40) mit dem Rotor (30) verbunden. Durch die untere Lagerung (40 X2) am Verbindungsgelenk (40) wird es dem Piloten ermöglicht, die im Flug übliche Gewichtsverlagerung am Fliehkraftsimulator anzuwenden. Dies bewirkt eine wesentliche Änderung der Aufteilung der Fliehkraftkomponenten gx, gy, und gz, die auf den Körper wirken. Daher ist dies bei der Simulation berücksichtigt. Die Resultierende aus den drei g-Komponenten bleibt dadurch unverändert.

### Schwenkbewegung um Achse (40 X1) mit zunehmender g-Belastung

### Aufgabenstellung

Beim Einleiten einer Steilspirale schwenkt am Beginn der Einleitung der Pilotenkörper erst um die Längsachse x (flaches Drehen). Je hoher die g-Belastung umso stärker wird der Körper nach außen gedrückt. Dabei ist gemäß einer mathematischen Beziehung jeder g-Belastung ein eindeutiger Winkel zugeordnet. (60° bei 2 g, 90° würde einer unendlichen Fliehkraft entsprechen.)

### Technische Realisierung

Diese Bewegung wird am Simulator durch die obere Lagerung (40 X1) am Verbindungsgelenk (40) realisiert.

### Schwenkbewegung um Achse (40 Z) mit zunehmender g-Belastung

### Aufgabenstellung

Durch die gleitschirmbedingte Aerodynamik mit zunehmender g-Belastung, erfährt der Pilot auch eine Drehung um seine Hochachse z, das so genannte "auf die Nase kippen". Dadurch wandert die Blickrichtung des Piloten mit zunehmender g-Belastung nach unten. Der Schirm geht in den Spiralsturz über. Radiale Beschleunigungen auf der Kreisbahn wirken jetzt nicht mehr wie anfangs in x-Richtung wie bei der Beschleunigung eines Karussells, sondern zunehmend entlang der Querachse y.

### Technische Realisierung

Diese Bewegung wird am Fliehkraftsimulator im Verbindungsgelenk (40) durch die Lagerung (40 Z) realisiert.

### Koppelung

### Aufgabenstellung

Das Zusammenspiel der beiden Auslenkungen des Piloten während der Beschleunigung auf seiner Bahn ist geringfügig abhängig von den Konstruktionsmerkmalen und Flugeigenschaften des Gleitschirmes. Anfänglich überwiegt die Rotation um die Längsachse x des Piloten, bei höheren g-Lasten überwiegt dann die Schwenkbewegung um die Hochachse z des Piloten (Blick nach unten). Grundsätzlich gilt aber, dass das Ausschwenken des Pilotenkörpers um die Längsachse x in der Lagerung (40 X1) immer kleiner ist als 90 °,da 90°einer g-Belastung von unendlich entsprechen würde. Im Gegensatz dazu kann die Drehung um die Hochachse z in der Lagerung (40Z) mehr als 90°betragen, der Pilot fliegt dann mit dem Körper in der Spiralbewegung bereits mit einer Rückwärtskomponente, was den Übergang in das Flugmanöver "SAT" bedeutet.

### Technische Realisierung

Um das Zusammenspiel der beiden Schwenkbewegungen um die Achsen (40 X1) und (40 Z) die der Pilot in der Spirale während seiner Beschleunigung vollführt am Fliehkraftsimulator zu realisieren, ist eine Koppelung (50) bestehend aus der Koppelungsstange (51) und der Koppelungsstange (52) zwischen Rotor (30) und Verbindungsgelenk (40) installiert.

Die Koppelung bewirkt, dass der Pilotenkörper, der mit zunehmender Drehung durch die Fliehkraft nach außen schwenkt (40 X1), auch wie im Flug seine Blickrichtung nach unten schwenkt. Dabei beeinflusst eine Änderung der Länge der Koppelungsstange (51) und der Koppelungsstange (52) sowie der Winkel zwischen z-y Ebene des Piloten und der Koppelungsstange (52) das Zusammenspiel der beiden Drehbewegungen. Durch die mechanische Veränderung dieser Parameter (Winkel und Länge der Koppelungsstangen (51) und (52) kann der Fliehkraftsimulator auf das Verhalten unterschiedlicher Gleitschirmtypen abgestimmt werden.

Die Koppelung der beiden Schwenkbewegungen um die x- und z-Achse des Piloten könnte auch durch eine elektromechanische Lösung mittels Stellmotoren und Regelungstechnik realisiert werden.

### Bremskraftanstieg mit zunehmendem Steuerweg

### Aufgabenstellung

Ein Gleitschirm verfügt über zwei so genannte "Bremsen" oder ,,Steuerleinen" (61) mit denen er gesteuert wird. Der "Steuerweg" ist das Maß in cm wie weit an der Steuerleine gezogen wird. Grundsätzlich ist der Bremskraftanstieg im geradeaus Flug beim Ziehen an den Steuerleinen (61) in etwa linear, jedoch geringfügig abhängig von den Konstruktionsmerkmalen des Gleitschirmes sowie von der Flächenbelastung (Gesamtgewicht bezogen auf die projizierte Tragfläche)

### Technische Realisierung

Dieser Bremskraftanstieg wird durch ein Raffgewicht realisiert, bei dem mehrere Gewichte (62) übereinander angebracht sind und jeweils das unterste Gewicht durch Zug so weit angehoben wird, bis es auf das nächste Gewicht trifft und dieses mitnimmt. Dadurch wird zwar je nach Anzahl der Gewichte ein stufenförmiger Bremskraftanstieg realisiert, der aber als quasilinear zu betrachten ist, da der menschliche Körper den stufenförmigen Anstieg der Belastung auf die Hand ohnehin schwer wahrnehmen kann.

Die Simulation des Bremskraftanstieges mit zunehmendem Steuerweg könnte auch durch eine elektromechanische Lösung mittels Stellmotoren und Regelungstechnik realisiert werden.

### Bremskraftanstieg mit zunehmender g-Belastung

### Aufgabenstellung

Zusätzlich zum Bremskraftanstieg mit zunehmendem Steuerweg, nimmt die Bremskraft mit zunehmender g-Belastung zu.

### Technische Realisierung

Durch die Verwendung von Gewichten (62) zur Simulation der Bremskraft wird ein Bremskraftanstieg mit zunehmender g-Belastung erreicht, da auf die Gewichte (62) die Selbe Fliehkraft wirkt, wie auf den Piloten. Dies wäre bei Verwendung einer Feder nicht der Fall.

Die Simulation des Bremskraftanstieges mit zunehmender g-Belastung könnte auch durch eine elektromechanische Lösung mittels Stellmotoren und Regelungstechnik realisiert werden.

### Simulatorsteuerung allgemein

Die Steuerleinen (61) laufen über Umlenkrollen (63), (64). An einer Umlenkrolle (64) ist ein Drehpotentiometer angebracht, welche das Steuersignal für einen Frequenzumformer liefert, der den Getriebemotor (20) und damit den Rotor (30) in Drehung versetzt. Ein Zug an der Steuerleine (61) bewirkt, dass der Rotor (30) des Fliehkraftsimulators beschleunigt und dadurch der Pilot in die simulierte Lage mit entsprechender g-Belastung gebracht wird. Dabei steigt die Bremskraft mit steigendem Bremsweg und steigender g-Last an.

### Virtual Reality Simulation

Der Fliehkraftsimulator ist in der Lage durch die oben angeführten Konstruktionsdetails die räumliche Lage des Piloten in Abhängigkeit von der Fliehkraft, dem realen Flug entsprechend, realistisch zu positionieren. Einzig der Radius und die Winkelgeschwindigkeit des Fliehkraftsimulators sind im Vergleich zum realen Flug verändert. Der Pilot vollführt am Fliehkraftsimulator auch keine reale Vertikalbewegung.

Um dem Fliehkraftsimulator eine weitere reale Komponente zu geben, sieht der Pilot während des Trainings seine unmittelbare Umgebung nicht. Er hat eine Virtual Reality Brille (90) auf, die zwei kleine hochauflösende Monitore und eine entsprechende Optik enthält. Diese Virtual Reality Brille (90) ist mit Infrarot Sensoren ausgestattet, ein bereits im Handel erhältliches Produkt, womit dem Piloten eine virtuelle dreidimensionale Landschaft eingeblendet wird. Durch die reale Lage, die durch die konstruktiven Komponenten des Fliehkraftsimulators verwirklicht werden, blickt der Pilot nun wie im Flug im selben Winkel auf die Landschaft, wie im Flug. Der Empfänger der Virtual Reality Brille ist im Zentrum des Fliehkraftsimulators angeordnet. Der geringfügig engere Radius auf dem der Pilot am Fliehkraftsimulator rotiert ist für die 3-d Wahrnehmung seiner Landschaft unerheblich.

### Anpassen der Winkelgeschwindigkeit der virtuellen Landschaft

### Aufgabenstellung

Die höhere Winkelgeschwindigkeit aufgrund der Bauweise des Fliehkraftsimulators (Pilotenrotation auf kleinerem Radius des Rotors (30) als im realen Flug) würde eine etwas höhere Rotation der virtuellen Landschaft als in Wirklichkeit ergeben. Dieser Unterschied zum realen Flug muss ausgeglichen werden.

### Technische Realisierung

Um die Winkelgeschwindigkeit des Fliehkraftsimulators an den entsprechenden virtuellen Eindruck anzugleichen wird der Empfängersensor des Virtual Reality Systems um die z-Achse in selber Drehrichtung wie der Rotor (30) versetzt jedoch langsamer, sodass die Winkelgeschwindigkeit zwischen Pilot und Koordinatensystem des Infrarotempfängers der realen Winkelgeschwindigkeit im Flug entspricht.

Wesentlicher Unterschied zu PC-Flugsimulatoren, die ebenfalls mit solchen Virtual Reality Brillen betrieben werden können ist, dass nicht die virtuelle Landschaft durch ein elektronisches Signal gesteuert wird, sondern die Landschaft als Koordinatensystem eingeblendet wird und sich die Bewegung im Raum erst durch die reale Bewegung des Piloten am Fliehkraftsimulator ergibt.

## Patentansprüche

1. Fliehkraftsimulator mit einem Rotor (30) und einer Pilotenaufhängung (60), **dadurch gekennzeichnet, dass** die Pilotenaufhängung (60) über ein Verbindungsgelenk (40) mit dem Rotor (30) verbunden ist, wobei am Verbindungsgelenk (40) eine erste Lagerung (40 X1) zum Verschwenken der Pilotenaufhängung (60) um die Längsachse (x) des Piloten und eine zweite Lagerung (40 Z) zum Verschwenken der Pilotenaufhängung (60) um die Hochachse (z) des Piloten vorgesehen sind **und dass** eine mechanische oder elektromechanische Koppelung (50) der Längsachse (x) und Hochachse (z) vorgesehen ist, die bei Verschwenken der Pilotenaufhängung (60) um die Längsachse (x) im Abhängigkeit vom Schwenkwinkel auch ein Verschwenken um die Hochachse (z) bewirkt.

2. Fliehkraftsimulator nach Anspruch 1, **dadurch gekennzeichnet, dass** die Kopplung (50) eine erste Kopplungsstange (51) und eine zweite Kopplungsstange (52) umfasst, wobei die erste Kopplungsstange (51) mit der ersten Lagerung (40 X1) gelenkig verbunden ist und die zweite Kopplungsstange (52) mit dem Rotor (30) und mit der ersten Kopplungsstange (51) gelenkig verbunden ist.

3. Fliehkraftsimulator nach Anspruch 1 oder 2, **dadurch gekennzeichnet, dass** an der Pilotenaufhängung (60) Aufhänge-Punkte (65) angeordnet sind, die mit einem Gurtzeug (70) verbunden sind **und dass** am Verbindungsgelenk (40) eine dritte Lagerung (40 X2) vorgesehen ist und ein Verschwenken der Pilotenaufhängung um die dritte Lagerung (40 X2) einen Aufhänge-Punkt (65) anhebt oder absenkt.

4. Fliehkraftsimulator nach einem der Ansprüche 1 bis 3, **dadurch gekennzeichnet, dass** an der Pilotenaufhängung (60) an beiden Seiten eine Steuerleine (61) angeordnet ist, die mit einem Raffgewicht verbunden sind, wobei am Raffgewicht mehrere Gewichte (62) übereinander und beabstandet voneinander angeordnet sind, die durch Ziehen an der Steuerleine in Abhängigkeit vom Steuerweg anhebbar sind.

5. Fliehkraftsimulator nach Anspruch 4, **dadurch gekennzeichnet, dass** die Steuerleinen (61) über Umlenkrollen (63, 64) geführt sind und an einer Umlenkrolle (63, 64) ein Drehpotentiometer angeordnet ist, das das Steuersignal für die Drehung des Rotors (30) liefert.

6. Fliehkraftsimulator nach einem der Ansprüche 1 bis 5, **dadurch gekennzeichnet, dass** eine Virtual Reality Brille (90) vorgesehen ist, über die dem Piloten eine virtuelle dreidimensionale Landschaft einblendbar ist.
